# EUROPEAN PATENT APPLICATION

(11) **EP 4 768 116 A1**
(43) Date of publication of application: **01.07.2026**
(21) Application number: 24856566.5
(22) Date of filing: 21.02.2024
(51) Int. Cl.: B01D 53/60, B01D 53/75, B01D 53/78, B01D 53/79, B01D 46/56, B01D 46/24, B01D 46/02, B01D 46/00, B01D 46/682

(54) **DUST COLLECTION AND DENITRIFICATION EQUIPMENT, AND ENVIRONMENTAL SYSTEM COMPRISING SAME**

(30) Priority: 21.08.2023 KR 20230109255
(71) Applicant: Geesco Co. Ltd., Seoul 08594 (KR)
(72) Inventor: HONG, Sung Ho, Seoul 06624 (KR)
(74) Representative: Habermann, Hruschka & Schnabel
(86) International application number: PCT/KR2024/002253
(87) International publication number: WO 2025/041945

(57) **Abstract**

An environmental system according to the present invention comprises: desulfurization equipment for desulfurizing exhaust gas provided from a boiler; and a plurality of pieces of dust collection and denitrification equipment for performing dust collection and denitrification on the exhaust gas provided from the desulfurization equipment, wherein the dust collection and denitrification equipment includes: a main body into which the exhaust gas flows from the desulfurization equipment; a dust collection part forming the lower region of the main body, and collecting, through a bag filter, dust from the exhaust gas provided from the desulfurization equipment; and a denitrification part forming the upper region of the main body, and including a honeycomb filter so as to denitrify the exhaust gas provided from the dust collection part.

## Description

### Technical Field

The disclosure relates to dust collection and denitrification equipment and an environmental system including the same, and more specifically to dust collection and denitrification equipment, which collects dust from and removes nitrogen or nitrogen compounds from exhaust gas discharged from a boiler or a combustion furnace, and an environmental system including the same.

### Background Art

With strengthened regulations on environmental pollution, an environmental system for reducing the emission of pollutants in various processes such as a power generation process, an incineration process and a combustion process has been increasingly researched, developed and distributed. The environmental system may refer to a system where a path for discharging exhaust gas generated from a boiler to the outside air is formed to remove pollutants contained in the exhaust gas.

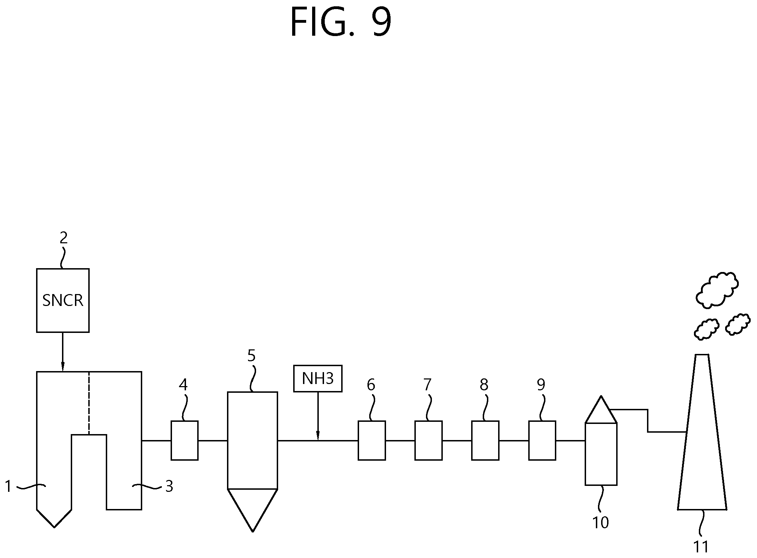

FIG. 9 is a conceptual diagram schematically showing a conventional environmental system
In a conventional environmental system shown in FIG. 9, exhaust gas generated from an incinerator 1 and a waste heat boiler 3 is discharged to the outside air through a chimney stack 11. In this case, a selective non-catalytic reduction (SNCR) device 2 may be connected to the incinerator 1, and a primary economizer 4, desulfurization equipment 5, dust collection equipment 6, a heater 7, denitrification equipment 8, a secondary economizer 9 and a wet cleaning tower 10 may be arranged in sequence between the waste heat boiler 3 and the chimney stack 11. Here, the desulfurization equipment 5 performs a desulfurization process for the exhaust gas. In addition, the dust collection equipment 6 performs a dust removal process for the exhaust gas exhausted from the desulfurization equipment 5, and the denitrification equipment 8 removes NOx from the exhaust gas, thereby discharging the exhaust gas through the chimney stack 11. However, in the case of the conventional environmental system where the denitrification equipment 8 is placed anterior to the chimney stack 11, the temperature of the exhaust gas in the denitrification equipment 8 should be raised using a heater 7. More specifically, the temperature of the exhaust gas provided to the denitrification equipment 8 may be 160 to 170 degrees. However, a filter mounted to the denitrification equipment 8 is capable of denitrification at a temperature of 200 degrees, and thus the temperature of the exhaust gas should be raised by the heater 7 to remove NOx in the denitrification equipment 8. Accordingly, the conventional environmental system has a problem that energy is inevitably wasted to raise the temperature of the exhaust gas.

### Disclosure

### Technical Problem

An aspect of the disclosure is to provide dust collection and denitrification equipment capable of dust collection and denitrification processes for exhaust gas having a temperature of 170 degrees or less, and an environmental system including the same.

### Technical Solution

According to an embodiment of the disclosure, an environmental system includes: desulfurization equipment configured to perform desulfurization for exhaust gas provided from a boiler; and a plurality of pieces of dust collection and denitrification equipment configured to perform dust collection and denitrification for exhaust gas provided from the desulfurization equipment, wherein the dust collection and denitrification equipment includes: a main body into which the exhaust gas flows from the desulfurization equipment; a dust collection part which forms a lower region of the main body, and uses a bag filter to perform the dust collection for the exhaust gas provided from the desulfurization equipment; and a denitrification part which forms an upper region of the main body, and including a honeycomb filter to perform the denitrification for the exhaust gas provided from the dust collection part.

The environmental system may further include a selective non-catalytic reduction device provided in a waste heat boiler of the boiler and supplying a reducing agent to exhaust gas of the waste heat boiler, wherein the selective non-catalytic reduction device injects the reducing agent at a location where the exhaust gas has a temperature of 850 degrees or higher.

An economizer may be provided between the waste heat boiler and the desulfurization equipment to heat feedwater of the boiler based on heat of exhaust gas, and a reducing agent injection unit may be provided between the waste heat boiler and the economizer to additionally inject a reducing agent toward exhaust gas provided from the waste heat boiler toward the economizer.

The environmental system may further include a reducing agent injection unit provided between the waste heat boiler and the desulfurization equipment to additionally inject a reducing agent in a section where the exhaust gas has a temperature of 300 to 400 degrees.

The dust collection and denitrification equipment may further include a reducing agent injection unit to inject a reducing agent from a lower side of the honeycomb filter toward the honeycomb filter, and a reducing agent injected from the reducing agent injection unit may be heated in advance to be in a previously vaporized state.

The dust collection and denitrification equipment may further include a pollutant removal unit provided between the honeycomb filter and the dust collection part, and the pollutant removal unit may be connected to a compressed air supply unit that supplies compressed air and a reducing agent supplying unit that supplies a reducing agent, so that the compressed air or the reducing agent can be injected inside the dust collection and denitrification equipment.

The pollutant removal unit may inject the compressed air to the dust collection part to remove pollutants from the dust collection part, or allow the reducing agent to diffuse between the honeycomb filter and the dust collection part.

The plurality of pieces of dust collection and denitrification equipment may be independently capable of controlling flow of exhaust gas introduced thereto, and when the dust collection and denitrification equipment required to remove pollutants from the dust collection part is present among the plurality of pieces of dust collection and denitrification equipment, the flow of the exhaust gas may be blocked in the dust collection and denitrification equipment required to remove the pollutants and the compressed air may be injected into the dust collection and denitrification equipment required to remove the pollutants while maintaining operation of the entire system.

The honeycomb filter may be manufactured by a catalyst powder method and is capable of removing Nox from exhaust gas having a temperature of 170 degrees or less.

The honeycomb filter may be manufactured by a catalyst powder method, be capable of removing Nox from exhaust gas having a temperature of 170 degrees or less by a cleaning operation and a coating operation, and be regenerable by the cleaning operation and the coating operation, the cleaning operation may include injecting a cleaning agent such as dry ice pellets to the filter, and the coating operation may include coating with a catalytically active material including a vanadium oxide aqueous solution.

The plurality of pieces of dust collection and denitrification equipment may be independently capable of controlling flow of exhaust gas introduced thereto, and when the dust collection and denitrification equipment required to regenerate the honeycomb filter is present among the plurality of pieces of dust collection and denitrification equipment, the cleaning operation and the coating operation may be performed while blocking the flow of the exhaust gas in the dust collection and denitrification equipment required to regenerate the honeycomb filter while maintaining operation of the entire system.

Meanwhile, according to an embodiment of the disclosure, Dust collection and denitrification equipment includes: a main body connected to desulfurization equipment that performs desulfurization for exhaust gas provided from a boiler; a dust collection part that forms a lower region of the main body, and uses a bag filter to perform dust collection for exhaust gas provided from the desulfurization equipment; and a denitrification part that forms an upper region of the main body, and including a honeycomb filter to perform denitrification for exhaust gas provided from the dust collection part.

### Advantageous Effects

Dust collection and denitrification equipment according to the disclosure, and an environmental system including the same have effects as follows:
First, according to the disclosure, pollutants contained in the exhaust gas are removed without additionally heating the exhaust gas, thereby having an effect on reducing energy waste in an operation of the environmental system.
Second, according to the disclosure, when the performance of a catalyst filter is lowered due to various pollutants, the poisoned filter may be cleaned and coated with vanadium oxide on site, thereby having an effect on regenerating the poisoned filter into a new catalyst filter.

The technical effects of the disclosure are not limited to the effects mentioned above, and other technical effects not mentioned will be clearly understood by those skilled in the art from the following descriptions.

### Description of Drawings

FIG. 1 is a conceptual diagram schematically showing an environmental system according to the present embodiment,
FIG. 2 is a conceptual diagram showing dust collection and denitrification equipment of an environmental system according to the present embodiment,
FIG. 3 is a conceptual diagram showing a honeycomb filter mounted to dust collection and denitrification equipment of an environmental system according to the present embodiment,
FIG. 4 is a flowchart showing a honeycomb filter manufacturing process of dust collection and denitrification equipment according to the present embodiment,
FIG. 5 is a flowchart showing a filter coating process in a honeycomb filter manufacturing process of dust collection and denitrification equipment according to the present embodiment,
FIG. 6 is a conceptual diagram schematically showing a first reducing agent injection unit of an environmental system according to the present embodiment,
FIG. 7 is a conceptual diagram schematically showing a second reducing agent injection unit of an environmental system according to the present embodiment,
FIG. 8 is a conceptual diagram schematically showing a third reducing agent injection unit and a pollutant removal unit of dust collection and denitrification equipment according to the present embodiment, and
FIG. 9 is a conceptual diagram schematically showing a conventional environmental system.

### Mode for Invention

The Below, embodiments of the disclosure will be described in detail with reference to the accompanying drawings. However, the disclosure is not limited to the embodiments set forth herein, but may be implemented in various ways. The embodiments are provided to only complete the disclosure and to allow a person having ordinary knowledge in the art to understand the category of the disclosure. The shapes, etc. of elements in the drawings may be exaggerated for clarity, and like numerals refer to like elements throughout the drawings.

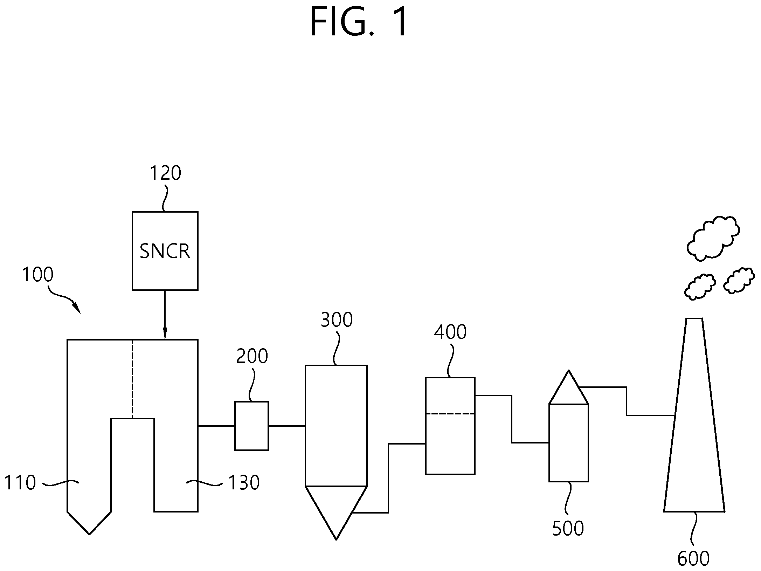

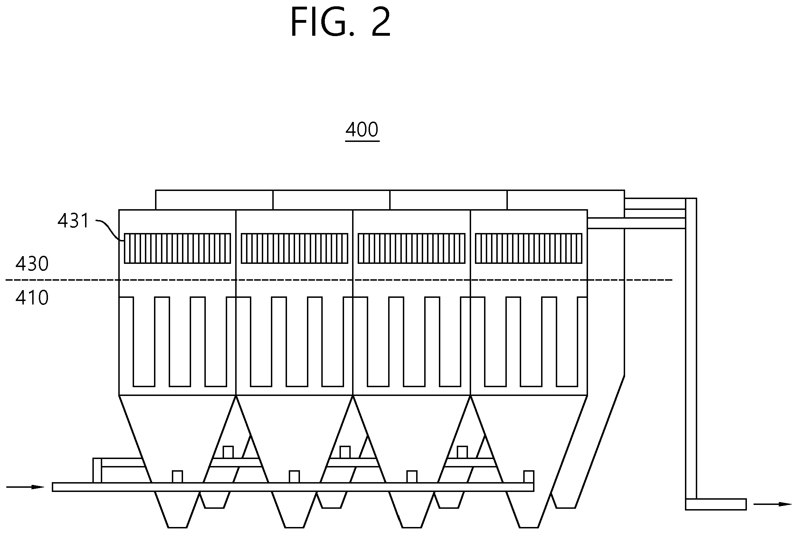

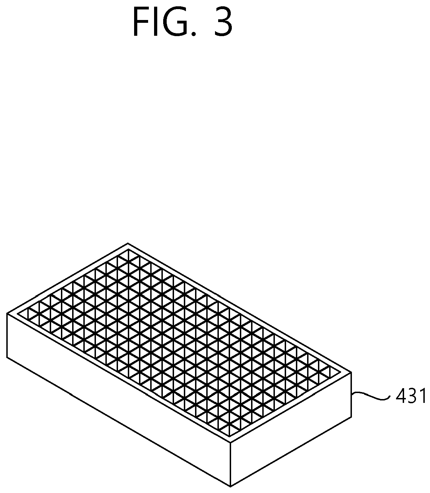

FIG. 1 is a conceptual diagram schematically showing an environmental system according to the present embodiment, FIG. 2 is a conceptual diagram showing dust collection and denitrification equipment of an environmental system according to the present embodiment, and FIG. 3 is a conceptual diagram showing a honeycomb filter mounted to dust collection and denitrification equipment of an environmental system according to the present embodiment,

As shown in FIGS. 1 to 3, an environmental system 1000 according to the present embodiment forms a path through which exhaust gas exhausted from a boiler 100 in various processes such as a power generation process, an incineration process, and a combustion process is discharged through a chimney stack 600.

First, the boiler 100 may include an incinerator 110 and a waste heat boiler 130, and may be internally formed with a combustion space in which a burner is installed. In the boiler 100, fuel may be supplied to the burner, and air may be introduced into the combustion space. Thus, the boiler 100 generates steam using the heat energy of the combustion space. In this case, the fuel supplied to the boiler 100 may include fossil fuel such as pulverized coal or heavy oil, biomass fuel, waste, etc., but is not limited thereto.

For example, when the boiler 100 uses pulverized coal as a fossil fuel, the burner is provided as a pulverized coal burner and injects air and pulverized coal into the combustion space. Thus, the pulverized coal diffused in the combustion space is combusted in a suspended state. In this case, the pulverized coal burner may be a low NOx burner to which a NOx combustion method is applied, but is not limited thereto.

Meanwhile, a selective non-catalytic reduction (SNCR) device 120 may be connected to the boiler 100. The selective non-catalytic reduction device 120 is connected to the waste heat boiler 130. The selective non-catalytic reduction device 120 injects a reducing agent into the interior of the waste heat boiler 130 so that NOx can be removed at a high temperature.

For example, the reducing agent may include urea, anhydrous ammonia (NH3), and ammonia water (NH₄OH). Urea water is inexpensive, requires simple storage facilities, is easy to handle, and is not subject to environmental regulations. In addition, anhydrous ammonia water has advantages of low costs, low energy consumption, low transportation frequency, and small storage facilities requiring less land for injection facilities. Further, ammonia water is safer than anhydrous ammonia because it is stored and transported under atmospheric pressure, and is suitable for installation in densely populated areas due to simple storage facilities. Therefore, in this embodiment, urea water, anhydrous ammonia water, and ammonia water may be selectively used.

Meanwhile, the selective non-catalytic reduction device 120 according to this embodiment is connected to the waste heat boiler 130. However, the selective non-catalytic reduction device 120 may be provided inside the waste heat boiler 130 to perform primary denitrification for the exhaust gas.

Further, an economizer 200 may be provided in the path of the exhaust gas from the boiler 100 to the environmental system 1000. The economizer 200 may heat the feedwater of the boiler 100 based on the heat of the exhaust gas.

Meanwhile, the environmental system 1000 may include desulfurization equipment 300 and dust collection and denitrification equipment 400. However, this is merely for describing the present embodiment, and the configuration of the environmental system 1000 is not limited.

First, the desulfurization equipment 300 is placed between the economizer 200 and the dust collection and denitrification equipment 400 to remove sulfur oxides from the exhaust gas that has passed through the economizer 200 from the boiler 100. For example, the exhaust gas exhausted from the boiler 100 may contain a large amount of sulfur oxides as sulfur content in fossil fuel is combusted. Thus, the desulfurization equipment 300 removes sulfur oxides contained in the exhaust gas, and the exhaust gas is provided to a plurality of pieces of dust collection and denitrification equipment 400.

Each dust collection and denitrification equipment 400 independently performs dust collection and denitrification for the exhaust gas provided from the desulfurization equipment 300.

The dust collection and denitrification equipment 400 performs the dust collection for the exhaust gas in a lower region (hereinafter referred to as a dust collection part 410) where the exhaust gas is provided from the desulfurization equipment 300. In addition, the dust collection and denitrification equipment 400 performs the denitrification for the exhaust gas in an upper region (hereinafter referred to as a denitrification part 430) so that the exhaust gas can be provided to the chimney stack 600 through a wet cleaning tower 500.

The dust collection part 410 performs the dust collection based on a bag filter, and the denitrification part 430 performs the denitrification based on a selective catalytic reduction filter (hereinafter referred to as a honeycomb filter 431) of which the cross-section in a height direction has a honeycomb shape.

In general, as shown in FIG. 9, the incinerators, the biomass boilers, the coal-fired power plants, etc. separately include the dust collection equipment 6 and the selective catalytic reduction (SCR) type denitrification equipment 8 installed anterior to the chimney stack 11, to perform the denitrification process. In this case, the exhaust gas provided to the denitrification equipment 8 has a temperature of 160 to 170 degrees. Therefore, in order to perform the denitrification process of the exhaust gas, it is necessary to heat the exhaust gas up to 200 degrees, at which low-temperature denitrification catalyst operation is enabled, using an additional energy source. Thus, the heater 7 is essential between the dust collection equipment 6 and the denitrification equipment 8.

However, the dust collection and denitrification equipment 400 according to the present embodiment performs the dust collection and denitrification in a single facility, and in particular, the denitrification for the exhaust gas having a temperature of 170 degrees or less is enabled by the honeycomb filter 431. Accordingly, the environmental system 1000 according to the present embodiment is capable of the denitrification for the exhaust gas having a temperature of 170 degrees or less despite being simplified, thereby reducing energy wasted in raising the temperature of the exhaust gas.

Besides, when the dust collection equipment 6 and the denitrification equipment 8 are configured separately as in the past, additional land is required and the exhaust gas needs to pass through 2 to 3 filter layers provided inside the denitrification equipment 8. Therefore, a pressure loss of 150 to 200 mmH2O usually occurs in the heater 7, the filter layers, and the secondary economizer 9, thereby resulting in power loss. On the other hand, the dust collection and denitrification equipment 400 according to the present embodiment is capable of reducing the pressure loss to 50 mmH2O or less because the honeycomb filter 431 is directly mounted to the upper portion of the dust collection part 410.

Below, the manufacturing of the honeycomb filter 431 will be described in detail with reference to the attached drawings.

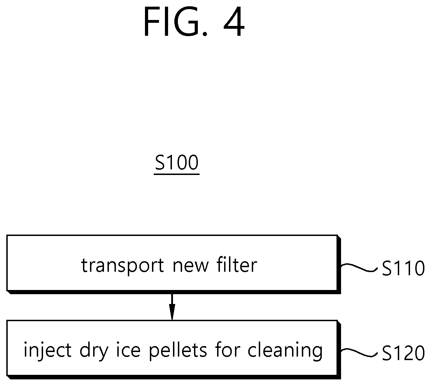

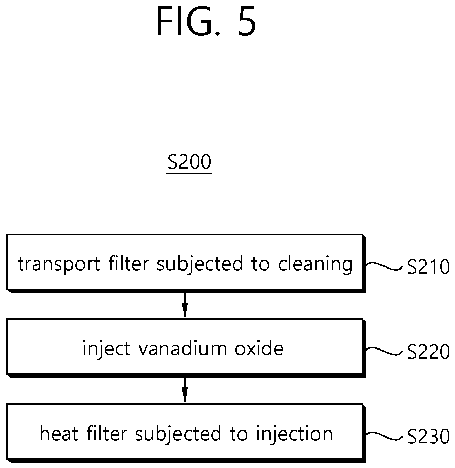

FIG. 4 is a flowchart showing a honeycomb filter manufacturing process of dust collection and denitrification equipment according to the present embodiment, and FIG. 5 is a flowchart showing a filter coating process in the honeycomb filter manufacturing process of the dust collection and denitrification equipment according to the present embodiment.

As shown in FIG. 4 and FIG. 5, the honeycomb filter 431 according to the present embodiment is manufactured by a catalyst powder method.

To manufacture an ultra-low temperature catalyst filter, it is generally required to add a high concentration of 3 to 6% vanadium to a catalyst filter. However, when vanadium content exceeds 3%, self-ignition occurs due to excessive vanadium addition during a drying and calcination process of the catalyst filter, thereby causing numerous cracks in a catalyst layer. In other words, the catalyst filter is inevitably subject to quality deterioration during the manufacturing process.

Accordingly, a pellet-type catalyst filter that is easy to manufacture is used in manufacturing the ultra-low temperature catalyst filter. However, when the catalyst is poisoned, it is virtually impossible to remove a poisoning substance from the pellet-type catalyst filter. In other words, the pellet-type catalyst filter is not regenerable, and is thus continuously required to be replaced, thereby incurring enormous costs.

However, the honeycomb filter 431 according to the present embodiment is manufactured by a catalyst powder method. In this case, the honeycomb filter 431 may be manufactured as a new catalyst filter through a catalyst powder manufacturing process, a clay manufacturing process, an extrusion process, and a drying and calcination process.

Further, to convert the new catalyst filter manufactured by the catalyst powder method into the honeycomb filter 431 applicable to industry, a cleaning operation S100 and a coating operation S200 are performed for the new catalyst filter.

First, in the cleaning operation, the new catalyst filter is transported to a working environment (S110). For example, the working environment may be a predetermined working place where the cleaning for the new catalyst filter is to be performed, and, as necessary, the cleaning may be performed while the new catalyst filter is mounted to the denitrification part 430.

Then, the cleaning for the new catalyst filter is performed based on a cleaning agent such as dry ice pellets (S120). In this case, the dry ice pellets are injected based on compressed air toward the new catalyst filter, and the injection pressure of the dry ice pellets may be, but not limited to, 4 to 8 bar. However, when the compressed air is injected at a pressure below the set range, the cleaning for the new catalyst filter may not be performed smoothly. On the other hand, when the compressed air is injected at a pressure above the set range, the new catalyst filter may be damaged.

In such a cleaning process, the dry ice pellets and the compressed air are injected toward the honeycomb of the new catalyst filter, and thus manufacturing residues remaining in the pores of the new catalyst filter may be crushed and removed according to the kinetic energy of collision with the dry ice pellets. Here, the manufacturing residues remaining in the pores of the new catalyst filter may be, but are not limited to, pollutants remaining during the production process of the new catalyst filter, for example, binders.

Meanwhile, as the dry ice pellets are sprayed, fine dry ice particles penetrate into the honeycomb of the new catalyst filter and sublimate (expand 500 to 800 times in volume), and the manufacturing residues are discharged from the pores to the outside. In other words, the manufacturing residues in the pores are discharged to the outside due to vacuum instantaneously formed by the dry ice particles rapidly passing between the inner walls of the honeycomb.

Then, when the cleaning operation for the new catalyst filter is completed, a coating process is performed. In the coating operation, the new catalyst filter is coated with a catalytically active material and heated to manufacture a honeycomb filter 431. Here, the catalytically active material may include a vanadium oxide aqueous solution.

In the coating process for the new catalyst filter, the new catalyst filter is transported to the working environment (S210). However, the coating process for the new catalyst filter may be performed under the same environment as the cleaning environment, and may be performed as necessary while the new catalyst filter is mounted to the denitrification part 430.

Then, the catalytically active material is injected toward the new catalyst filter (S220). In addition, the new catalyst filter coated with the catalytically active material may be dried and calcined by heating (S230). For example, when the new catalyst filter is not mounted to the denitrification part 430, that is, when the coating is performed in a separate working environment, a separate heating device may be used or the new catalyst filter is moved to a heating environment to experience the drying and calcining processes. On the other hand, when the new catalyst filter is mounted to the denitrification part 430, drying and calcination of the new catalyst filter may be achieved by operating the boiler 100 connected to the environmental system 1000 without separate drying and calcining processes. In addition, even though the coating is performed while the new catalyst filter is not mounted to the denitrification part 430, the drying and calcination of the new catalyst filter may be achieved by mounting the coated new catalyst filter to the denitrification part 430 and operating the boiler 100.

Accordingly, the new catalyst filter manufactured by the catalyst powder method may be converted into the honeycomb filter 431 suitable for low-temperature denitrification at 170 degrees or less by the cleaning with the dry ice pellets and the drying and calcination completed after the coating with vanadium oxide.

When the regeneration of the honeycomb filter 431 is required due to poisoning, the honeycomb filter 431 may be regenerated by performing the foregoing cleaning and coating processes in sequence.

Meanwhile, referring back to FIGS. 1 to 3, the denitrification part 430 of the dust collection and denitrification equipment 400 needs a reducing agent in the process of removing NOx.

Conventionally, the reducing agent is supplied anterior to the dust collection equipment 6, as shown in FIG. 9. That is, the reducing agent is directly injected into the exhaust gas provided from the desulfurization equipment 5 to the dust collection equipment 6. Thus, the exhaust gas passes through the dust collection equipment 6 together with the reducing agent. However, in the case of supplying the reducing agent anterior to the dust collection equipment 6, the reducing agent is injected into the exhaust gas having a temperature of 170 degrees or less. In this case, the reducing agent is not sufficiently vaporized due to the low temperature of the exhaust gas, and thus the amount of reducing agent required increases. As the amount of reducing agent required increases, the corrosion of the posterior equipment is accelerated due to the reducing agent. In other words, when the reducing agent is supplied anterior to the dust collection equipment 6, problems arise in that an energy efficiency is lowered and the equipment deteriorates rapidly.

On the other hand, according to the present embodiment, the reducing agent slipped from the selective non-catalytic reduction device 120 may be provided into the denitrification part 430. As described above, the selective non-catalytic reduction device 120 directly injects the reducing agent into the interior of the waste heat boiler 130 so that NOx can be removed at a high temperature of 850 degrees or higher.

However, when the selective non-catalytic reduction device 130 is used to remove NOx from the waste heat boiler 130, the amount of reducing agent used is 1.5 to 2.0 times larger than that of when operating the denitrification equipment 8 (see FIG. 9). Accordingly, in order to reduce the amount of reducing agent used, it is required to decrease the amount of NOx removed in the selective non-catalytic reduction device 120 and increase the amount of NOx removed in the denitrification part 430. In this case, the slip of the reducing agent injected from the selective non-catalytic reduction device 120 may be insufficient to operate the denitrification part 430. Therefore, the environmental system 1000 includes an additional reducing agent injection unit.

Hereinafter, the reducing agent injection unit according to various embodiments will be described with reference to the accompanying drawings.

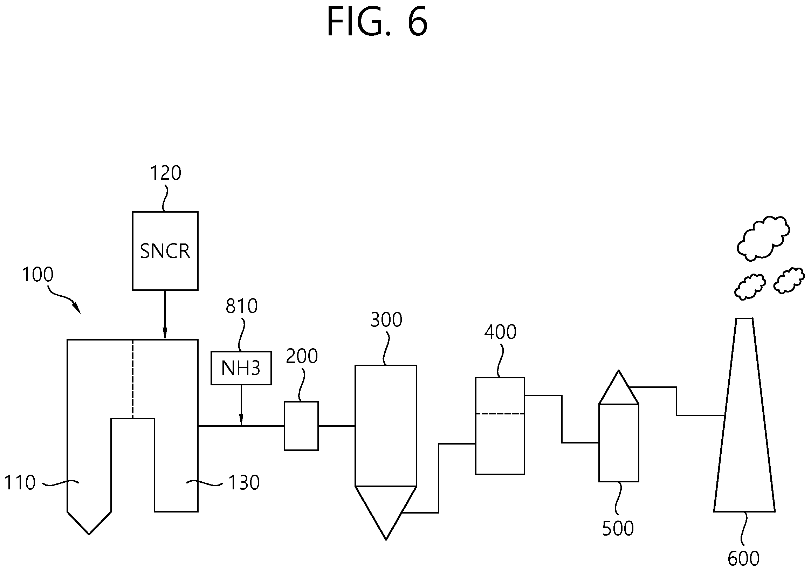

FIG. 6 is a conceptual diagram schematically showing a first reducing agent injection unit of an environmental system according to the present embodiment

As shown in FIG. 6, a first reducing agent injection unit 810 according to the present embodiment directly injects the reducing agent toward the exhaust gas anterior to the economizer 200 so that NOx can be removed in the denitrification part 430.

For example, the exhaust gas supplied from the waste heat boiler 130 to the economizer 200 has a temperature of about 300 to 400 degrees. Thus, the first reducing agent injection unit 810 directly injects the reducing agent into the exhaust gas having a temperature high enough to induce most of the reducing agent to be vaporized. Accordingly, the removal of Nox is stably performed in the denitrification part 430.

Meanwhile, it may be difficult to directly connect the first reducing agent injection unit 810 to the path, according to the environments, structures, conditions, etc. of the environmental system 1000. Accordingly, the injection of the reducing agent may be performed in the denitrification part 430 of the dust collection and denitrification equipment 400.

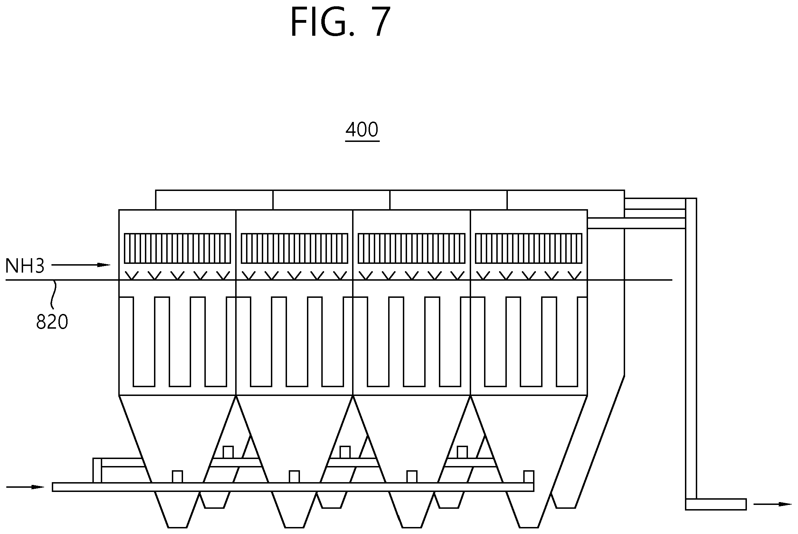

FIG. 7 is a conceptual diagram schematically showing a second reducing agent injection unit of an environmental system according to the present embodiment

As shown in FIG. 7, a second reducing agent injection unit 820 according to the present embodiment injects the reducing agent toward the exhaust gas inside the denitrification part 430 so that NOx can be removed in the denitrification part 430. In this case, the reducing agent may be heated in advance and may be in a previously vaporized state, and the second reducing agent injection unit 820 may include a plurality of nozzles corresponding to the entire area of the honeycomb filter 431.

The second reducing agent injection unit 820 is placed between the dust collection part 410 and the honeycomb filter 431 to inject the reducing agent toward the honeycomb filter 431. Thus, the second reducing agent injection unit 820 is not affected by dust, etc. and eliminate the blockage of the bag filter of the dust collection part 410 caused by the reducing agent.

Meanwhile, the dust collection part 410 includes the bag filter. Thus, the bag filter may be filled with pollutants while operating the environmental system 1000. Accordingly, the dust collection and denitrification equipment 400 may include a pollutant removal unit for removing pollutants from the bag filter.

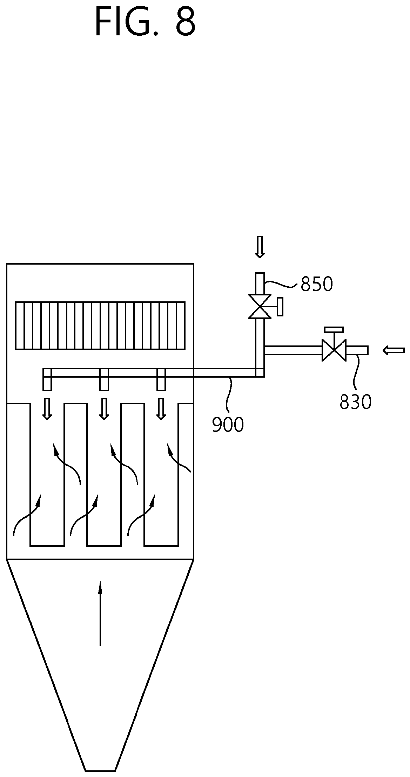

FIG. 8 is a conceptual diagram schematically showing a pollutant removal unit of dust collection and denitrification equipment according to the present embodiment

As shown in FIG. 8, the denitrification part 430 according to the present embodiment may include a pollutant removal unit 900 placed between the bag filter and the honeycomb filter 431 and discharging the reducing agent or compressed air toward the bag filter. The pollutant removal unit 900 includes a plurality of nozzles, and is connected to a third reducing agent supply unit 830 that supplies the reducing agent and a compressed air supply unit 850 that supplies the compressed air.

Thus, the pollutant removal unit 900 may receive the reducing agent from the third reducing agent supply unit 830 while the supply of the compressed air is blocked by a valve. In this case, the pollutant removal unit 900 allows the reducing agent to diffuse inside the denitrification part 430 so that the removal of Nox can be stably performed.

In addition, the pollutant removal unit 900 may receive the compressed air from the compressed air supply unit 850 while the supply of the reducing agent is blocked by the valve. In this case, the pollutant removal unit 900 may remove pollutants filled in the bag filter by injecting the compressed air toward the bag filter. In this case, the third reducing agent supply unit 830 for the diffusion and the compressed air supply unit 850 for the cleaning may be different in supply pressure from each other.

Thus, the dust collection and denitrification equipment 400 may periodically block the supply of the reducing agent and perform the cleaning of the bag filter to remove dust, etc. through the compressed air supply unit 850, while supplying the reducing agent necessary for the denitrification catalyst operation through the third reducing agent supply unit 830.

In addition, a plurality of pieces of dust collection and denitrification equipment 400 may be provided to operate independently of each other, so that each dust collection and denitrification equipment 400 can individually block the flow of the exhaust gas through a damper. Thus, each dust collection and denitrification equipment 400 may independently perform the cleaning for the bag filter as necessary while blocking the flow of the exhaust gas without stopping the operation of the environmental system 1000. Further, even when the regeneration of the honeycomb filter 431 is required, the dust collection and denitrification equipment 400 may perform the cleaning and coating operations for the regeneration of the honeycomb filter 431 while blocking the flow of the exhaust gas without stopping the operation of the environmental system 1000.

Thus, the dust collection and denitrification equipment according to the disclosure and the environmental system including the same have the following effects.

First, according to the disclosure, pollutants contained in the exhaust gas are removed without additionally heating the exhaust gas, thereby having an effect on reducing energy waste in an operation of the environmental system.

Second, according to the disclosure, when the performance of a catalyst filter is lowered due to various pollutants, the poisoned filter may be cleaned and coated with vanadium oxide on site, thereby having an effect on regenerating the poisoned filter into a new catalyst filter.

The embodiments of the disclosure described above and illustrated in the drawings should not be construed as limiting the technical idea of the disclosure. The scope of the disclosure is limited only by the matters disclosed in the appended claims, and a person having ordinary skill in the technical field of the disclosure may improve and change the technical idea of the disclosure in various forms. Accordingly, such improvements and changes will fall within the scope of the disclosure as long as they are obvious to those skilled in the art.

## Claims

1. An environmental system comprising:
desulfurization equipment configured to perform desulfurization for exhaust gas provided from a boiler; and
a plurality of pieces of dust collection and denitrification equipment configured to perform dust collection and denitrification for exhaust gas provided from the desulfurization equipment, wherein
the dust collection and denitrification equipment comprises:
a main body into which the exhaust gas flows from the desulfurization equipment;
a dust collection part which forms a lower region of the main body, and uses a bag filter to perform the dust collection for the exhaust gas provided from the desulfurization equipment; and
a denitrification part which forms an upper region of the main body, and comprising a honeycomb filter to perform the denitrification for the exhaust gas provided from the dust collection part.

2. The environmental system of claim 1, further comprising a selective non-catalytic reduction device provided in a waste heat boiler of the boiler and supplying a reducing agent to exhaust gas of the waste heat boiler, wherein
the selective non-catalytic reduction device injects the reducing agent at a location where the exhaust gas has a temperature of 850 degrees or higher.

3. The environmental system of claim 2, further comprising:
an economizer provided between the waste heat boiler and the desulfurization equipment to heat feedwater of the boiler based on heat of exhaust gas, and
a reducing agent injection unit provided between the waste heat boiler and the economizer to additionally inject a reducing agent toward exhaust gas provided from the waste heat boiler toward the economizer.

4. The environmental system of claim 2, further comprising a reducing agent injection unit provided between the waste heat boiler and the desulfurization equipment to additionally inject a reducing agent in a section where the exhaust gas has a temperature of 300 to 400 degrees.

5. The environmental system of claim 2, wherein
the dust collection and denitrification equipment further comprises a reducing agent injection unit to inject a reducing agent from a lower side of the honeycomb filter toward the honeycomb filter, and
a reducing agent injected from the reducing agent injection unit is heated in advance to be in a previously vaporized state.

6. The environmental system of claim 1, wherein
the dust collection and denitrification equipment further comprises a pollutant removal unit provided between the honeycomb filter and the dust collection part, and
the pollutant removal unit is connected to a compressed air supply unit that supplies compressed air and a reducing agent supplying unit that supplies a reducing agent, so that the compressed air or the reducing agent can be injected inside the dust collection and denitrification equipment.

7. The environmental system of claim 6, wherein the pollutant removal unit injects the compressed air to the dust collection part to remove pollutants from the dust collection part, or allows the reducing agent to diffuse between the honeycomb filter and the dust collection part.

8. The environmental system of claim 6, wherein
the plurality of pieces of dust collection and denitrification equipment are independently capable of controlling flow of exhaust gas introduced thereto, and
upon the dust collection and denitrification equipment required to remove pollutants from the dust collection part among the plurality of pieces of dust collection and denitrification equipment, the flow of the exhaust gas is blocked in the dust collection and denitrification equipment required to remove the pollutants and the compressed air is injected into the dust collection and denitrification equipment required to remove the pollutants while maintaining operation of the entire system.

9. The environmental system of claim 1, wherein the honeycomb filter is manufactured by a catalyst powder method and is capable of removing Nox from exhaust gas having a temperature of 170 degrees or less.

10. The environmental system of claim 1, wherein
the honeycomb filter is manufactured by a catalyst powder method, is capable of removing Nox from exhaust gas having a temperature of 170 degrees or less by a cleaning operation and a coating operation, and is regenerable by the cleaning operation and the coating operation,
the cleaning operation comprises injecting a cleaning agent such as dry ice pellets to the filter, and
the coating operation comprises coating with a catalytically active material comprising a vanadium oxide aqueous solution.

11. The environmental system of claim 10, wherein
the plurality of pieces of dust collection and denitrification equipment are independently capable of controlling flow of exhaust gas introduced thereto, and
upon the dust collection and denitrification equipment required to regenerate the honeycomb filter among the plurality of pieces of dust collection and denitrification equipment, the cleaning operation and the coating operation are performed while blocking the flow of the exhaust gas in the dust collection and denitrification equipment required to regenerate the honeycomb filter while maintaining operation of the entire system.

12. Dust collection and denitrification equipment comprising:
a main body connected to desulfurization equipment that performs desulfurization for exhaust gas provided from a boiler;
a dust collection part that forms a lower region of the main body, and uses a bag filter to perform dust collection for exhaust gas provided from the desulfurization equipment; and
a denitrification part that forms an upper region of the main body, and comprising a honeycomb filter to perform denitrification for exhaust gas provided from the dust collection part.
